# EUROPEAN PATENT APPLICATION

(11) **EP 0 593 131 A1**
(43) Date of publication of application: **20.04.1994**
(21) Application number: 93202905.1
(22) Date of filing: 14.10.1993
(51) Int. Cl.: G01S 13/02, G07C 9/00, G08B 13/24, A63B 29/02

(54) **Combined electronic person admission control system and person search system, suitable in particular for use in winter sports areas**

(30) Priority: 15.10.1992 NL 9201791
(71) Applicant: N.V. Nederlandsche Apparatenfabriek NEDAP, NL-7141 DE Groenlo (NL)
(72) Inventor: Fockens, Tallienco Wieand Harm, NL-7165 BR Rietmolen (NL)
(74) Representative: Smulders, Theodorus A.H.J., Ir.

(57) **Abstract**

Disclosed is a combined electronic person control system and person search system, suitable in particular for use in winter sports areas, comprising a plurality of passage zones provided with at least one interrogating device which is designed to generate an electromagnetic interrogation field with a predetermined frequency in the associated passage zone; a plurality of passive electronic responders which are carried by the persons making use of the system and which comprise a resonant circuit tuned to the predetermined frequency, and active means for generating a unique code signal if a responder is disposed in an interrogation field generated by an interrogating device, which code signal can be recognized by the interrogating device.

According to the invention, the system comprises at least one movable transmitter/receiver device for detection purposes, which is designed to provide an interrogation signal which is capable of bringing the resonant circuit of a responder into resonance at a relatively large distance, and to detect the signal provided by the resonant circuit, independently of the presence or absence of the code signal of the responder in question.

## Description

This invention relates to a combined electronic person admission control system and person search system, suitable in particular for use in winter sports areas, comprising a plurality of passage zones provided with at least one interrogating device which is designed to generate an electromagnetic interrogation field with a predetermined frequency in the associated passage zone; a plurality of passive electronic responders which are carried by persons making use of the system and which comprise a resonant circuit tuned to the predetermined frequency, and active means for generating a unique code signal if a responder is disposed in an interrogation field generated by an interrogating device, which code signal can be recognized by the interrogating device.

A person admission control system and in particular a responder (also referred to as label, transponder, tag or detection plate) for use in such a system is described in Dutch Patent 176404. This known responder is a passive responder which comprises an active code circuit which is provided with supply energy as soon as the responder is disposed in an electromagnetic interrogation field of sufficient strength. The required supply energy is drawn from the interrogation field. For that purpose, each responder is provided with a resonant circuit tuned to the frequency of the interrogation field, this resonant circuit being capable, in operation, of supplying a supply voltage to the active code circuit via a rectifier circuit. The operating frequency is normally in the radio-frequency range and can for instance be 120 kHz. The code circuit provides a binary code signal which is used to tune or (partly) short-circuit a tuned LC-circuit of the responder in the rhythm of the code. Advantageously, as described in Dutch Patent 176404, the tuned circuit to be influenced in the rhythm of the code can be the same tuned circuit as the circuit providing the supply energy. In that case, the energy absorption of the responder is varied by the code signal in a rhythm corresponding with the code, which can be detected in the interrogating device.

In the case of use in a winter sports area, it is for instance possible to arrange at each ski lift an interrogating device which clears a passage each time a responder with a valid code is recognized. Such person admission control systems have already been marketed by applicant in many practical embodiments, *inter alia* for use in skiing areas. Although these known systems can operate "handsfree", i.e., a responder which a user of the system carries in his pocket or between his clothes can be recognized, the maximum detection distance at which the code can still be recognized is not much higher than 70 to 100 cm at the official maximum allowable strength of the interrogation or transmission field.

If it were desired to use the responders of the above-described person admission control system also for detecting persons buried under an avalanche snowslip, a problem would present itself in that a detection distance of 70 to 100 cm is insufficient. To be able to trace persons buried under the snow, a detection distance of a few meters is necessary. The same applies if persons are to be traced who are buried under debris, as may occur in earthquake zones, or under mud, earth, water, etc.

The object of the invention is to provide a solution to the problem outlined. According to the invention, a combined person admission control and person search system of the above-described type is characterized in that the system comprises at least one movable transmitter/receiver device for detection purposes, which is designed to provide an interrogation signal which is capable of bringing the above-mentioned resonant circuit of a responder into resonance at a relatively large distance, and to detect the signal provided by the resonant circuit, independently of the presence or absence of the code signal of the responder in question.

The present invention provides a major advantage in that the electronic responders which are carried anyway by all or nearly all of the persons in a particular area or building or complex of buildings can be used for detecting missing persons. For that purpose, the only necessary additional provision is a plurality of portable transmitter/receiver devices. The invention is based on the insight that in the detection of persons buried under snow, for instance, the identity of the persons is only of secondary importance and that it is not necessary to detect the code. Accordingly, it is not necessary either that the interrogation field is so strong that the active circuits of the responders can come into operation. It is sufficient if the resonance effect of the resonant circuits of the responders arises. The resonant effect already occurs if a responder is disposed in a relatively weak magnetic alternating field and the invention makes use of this resonance effect to detect responders, and hence persons carrying those responders with them, at a relatively large distance.

It is observed that it is already known as such to detect persons buried under snowslides by means of responders carried by those persons.

EP-A-0342481 (Tiefengraber) describes a ski pass provided with a transmitter. The transmitter is an active transmitter which is provided with a battery and which is in operation during the entire useful life of the ski pass. However, this known transmitter does not have any function in an electronic admission control system, nor can it function as a responder for such a system because the continuously transmitting transmitters, which should have a relatively large range, prevent, or at least seriously hinder, recognition of the individual transmitters (and the associated persons) by the interrogating device. Moreover, of course, there exists the risk of the battery of a responder becoming exhausted or defective.

FR-A-2585846 (État Français) describes a system similar to EP-A-0342481, which, accordingly, suffers from the same drawbacks.

EP-A-0172445 (Asulab) describes a passive responder which is provided with a dipole antenna and which, upon receiving a transmitted signal with frequency f, transmits a response signal with the double frequency 2f. A drawback of this known responder is that the dipole antenna must have a length which is half the wavelength of the transmitted signal. Accordingly, very high frequencies are necessary, for instance 1GHz and higher, in order to obtain acceptable responder dimensions. However, such high frequencies are not always acceptable for admission control purposes. Nor can the known responder generate a unique code signal.

Hereinafter the invention will be further explained with reference to the accompanying drawings.
Fig. 1 schematically shows an example of a responder for use in a system according to the invention, and a portable transmitter/receiver device;
Fig. 2 schematically shows a number of signal shapes which can occur during operation in the transmitter/receiver device of Fig. 1;
Fig. 3 schematically shows in more detail an example of a receiver device for use in the transmitter/receiver device of Fig. 1; and
Fig. 4 schematically illustrates an example of a signal processing method for use in a system according to the invention.

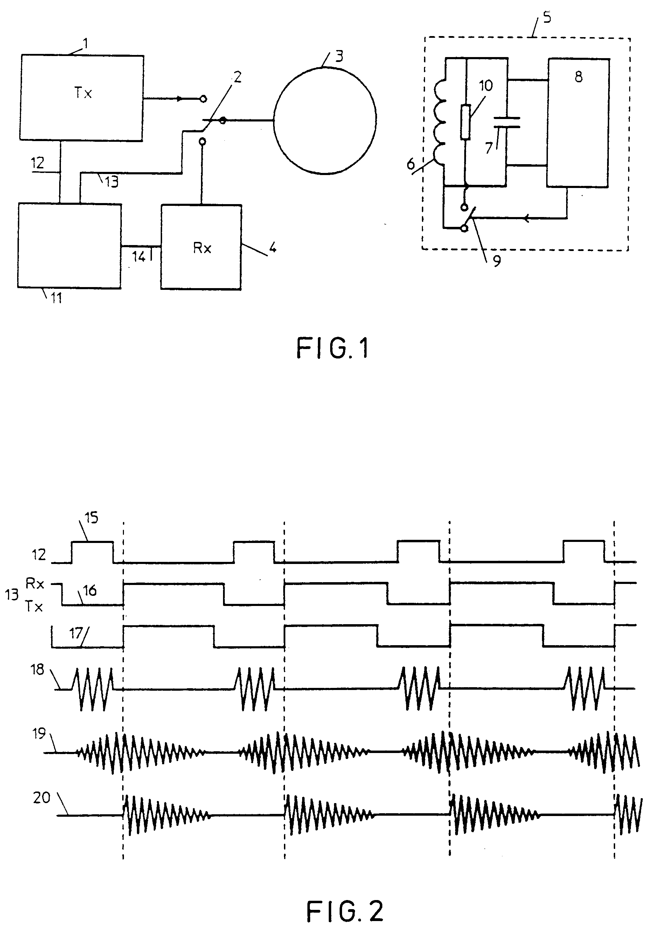

Fig. 1 schematically shows a responder (label, transponder, tag) 5 which is suitable for use in a system according to the invention. The responder shown is of the type described in Dutch Patent 176404, but within the scope of the invention, variants can be used as well. The responder shown comprises a resonant circuit and an electronic circuit 8. In operation, the electronic circuit controls a switch element 9 which is capable of short-circuiting the resonant circuit, which comprises an air-cored coil - or a coil wound onto a ferrite rod - 6 and a capacitor 7, via resistor 10, in the rhythm of a binary identification code stored in the electronic circuit. The responder starts functioning when it is introduced into the interrogation field. This interrogation field is a magnetic alternating field, continuously present in an interrogation zone, in the radio-frequency range, for instance with a frequency of 120 kHz. The interrogation field generates a voltage across coil 6, which, after rectification in circuit 8, provides the supply of this circuit. For that purpose, this voltage should exceed a specified minimum value, which can be approx. 4 v. Since the resonant circuit 6, 7 is tuned to the frequency of the interrogation field, it will absorb energy from the interrogation field. If the switch 9 is closed, the resonant circuit is strongly damped, so that the resonance effect decreases, and hence the energy absorption. A similar effect arises if the self-induction of the coil or the capacitance value of the capacitor is modified. This variation in energy absorption can be detected in the interrogating device or transmitter/receiver unit, allowing the identification code to be read from the electronic responder. The maximum distance at which the responder can still be read out properly is approx. 70 cm.

These electronic responders are used *inter alia* as ski passes giving access to ski lifts on winter sports grounds, which implies that every user carries such an electronic responder with him. This makes it useful, in case any persons are buried under snow slides, to search for these electronic responders in electronic manner.

As stated above, the code in the responder can be read at distances of up to approx. 70 cm. This is generally insufficient to trace persons buried under the snow. This requires detection distances of a few meters. The conventional transmitter/receiver is no longer capable of creating so strong an interrogation field at these distances, that sufficient voltage is generated in the label circuit to enable code circuit 8 to function. However, the resonance effect is present, independent of the signal level. If circuit 8 does not function, switch 9 is always open, so that circuit 6, 7 is undamped. At lower voltage levels, the loading of the circuit by circuit 8 will also become zero, as a consequence of diode threshold voltage effects of the rectifier diodes in circuit 8. The result is that at low signal levels, circuit 6, 7 is entirely undamped. Accordingly, if a responder is disposed in a weak magnetic alternating field, the resonance effect will, relatively speaking, be manifest most strongly.

A second property of a resonating circuit is that it continues to oscillate for a while when the original exciting magnetic field is switched off. This property makes it possible to detect the presence of a label at a greater distance than 70 cm. For this purpose, a plurality of movable and preferably portable transmitter/receiver devices are provided, as shown schematically in the left-hand portion of Fig. 1. The transmitter 1 is designed in each case to momentarily generate a radio-frequency alternating field by means of an antenna coil 3. Directly after the expiry of a transmission period, switch 2 will switch the antenna coil 3 from the transmitter to the receiver 4. This receiver can subsequently detect the magnetic alternating field generated by the still oscillating label resonant circuit 6, 7.

In this configuration it is quite possible to strongly increase the transmitting power of the transmitter 1, compared with what is conventional in the original person admission control system (identification system, detection system). The associated drawback of additional noise on the transmitted signal, which defines the receiver sensitivity in the system, is not present now because in this configuration the receiver listens after the transmission period and not during transmission.

Also, it is probably possible to obtain for this application an exemption from restrictive provisions regarding transmission field strengths of the national telecommunication administrations (PTT in the Netherlands) because these search systems will be used exclusively for saving lives.

Fig. 2 represents the sequence as well as a number of signal shapes. The signals 15, 16 and 17 are generated by the control circuit 11 (Fig. 1). The transmitter is switched on and switched off across connection 12. Switch 2 (Fig. 1), controlled by connection 13, is switched according to signal 16 (high = reception). Signal 17 indicates the control of the receiver via connection 14 (Fig. 1). If signal 17 is "high", the receiver is switched on. Under the control of signal 15, the transmitter transmits transmitted signal 18. The transmitted signal has a predetermined frequency which corresponds with the resonant frequency of the resonant circuit 6, 7 or a predetermined narrow transmission frequency range which includes the resonant frequency of the responders. The transmitted signal brings the resonant circuit of a responder located in the vicinity into resonance. As a result, the resonant circuit will oscillate, as shown by signal 19. After switch 2 has been switched, the receiver receives the signal 20. This signal is a dying oscillation which repeats itself after each transmission period. This signal can in principle be detected with a simple enclosing detector. However, the signal in question is very weak and hidden under noise and other interfering signals. Therefore the signal is preferably digitalized first and subsequently processed in a digital signal processor.

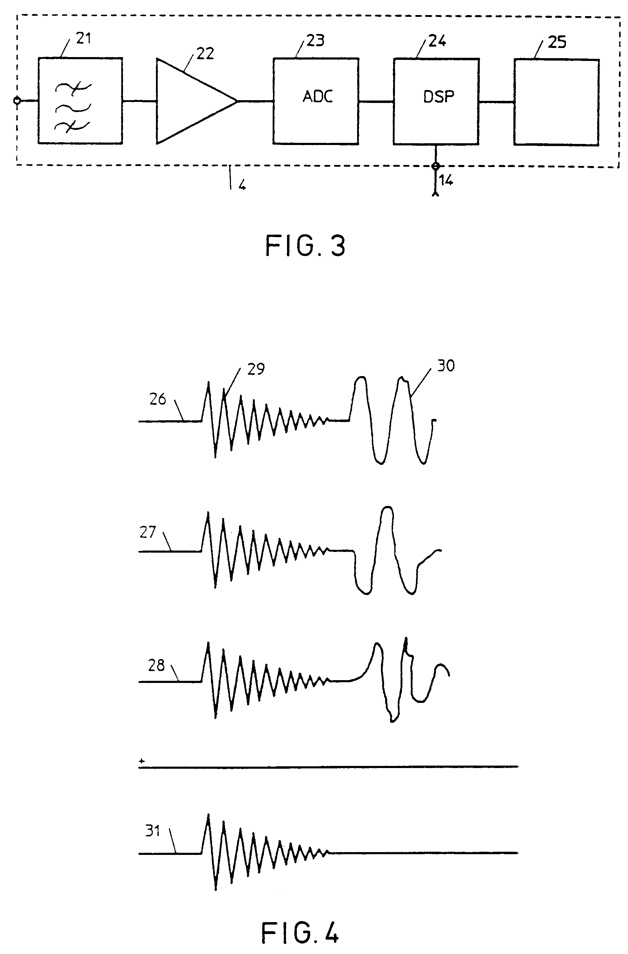

Fig. 3 shows a more detailed block diagram of an example of the receiver 4. The received signal first passes through a band pass filter 21 to eliminate all signals with a deviant frequency and subsequently through an amplifier 22. An AD converter 23 samples the amplified received signal and provides for the analog-digital conversion, whereafter the digital signal processor 24 can apply a detection algorithm to it. One of the operations in a detection algorithm can be an averaging process in which successive received signals are superposed and are averaged sample by sample from the starting point. This is shown in Fig. 4. The signals 26, 27 and 28 are part of a series of received signals at the input of the receiver. By adding according to vertical columns the digital samples taken from these signals, the sum signal 31 is produced. If the three signals are uniform, the sum signal is of the same shape. However, noise and interfering signals, designated by 30, are not uniform. The average value of the samples that are taken from these is in principle equal to zero. Accordingly, in the sum signal 31 nothing or practically nothing is left of the noise and interference.

Other known techniques, such as correlation of the received signal with a known reference signal shape, can be applied here as well. In that case, the received signals are subjected to an analog or digital comparison with a predetermined "standard" responder signal. The techniques required for this are known per se and therefore are not further described. The digital signal processor 24 is followed by the signaling device 25 (fig. 3). This signaling device can consist of a measuring instrument, another visual indicator and/or an acoustic alarm. It is also possible to derive an audible signal from the digital signal processor via a digital - analog conversion, which audible signal represents the received signal and is applied to a headphone or loudspeaker. This provides the possibility of leaving to a trained human ear the decision whether a (weak) signal originating from a responder or an interfering signal is involved. This form of signaling in particular provides the maximum detection sensitivity and simultaneously provides the possibility of accurately determining the position of the responder.

It is observed that, after the foregoing, various modifications will readily occur to a person of ordinary skill in the art. The possibility of using a system according to the invention in earthquake zones has already been mentioned. In that case, it would for instance be possible to provide all persons in a complex of buildings with responders which serve for admission control and which can also serve, in the manner described above, for detecting persons buried under debris and the like. Similarly, application in areas where other (natural) disasters may occur is possible. Wherever in the foregoing the predetermined transmission frequency or resonant frequency has been mentioned, these terms were, of course, intended to include a predetermined frequency range as well.

If so desired, a system according to the invention can also be used for detecting animals or articles.

Also, the processor 24, instead of being programmed with the standard digital signal processing algorithms, can naturally be programmed as well with an algorithm based on Fuzzy Logic principles.

Further, instead of a digital signal processor, a signal processor built up according to the principles of neural networks can be used as well.

These and similar modifications are understood to fall within the scope of the invention.

## Claims

1. A combined electronic person admission control system and person search system, suitable in particular for use in winter sports areas, comprising a plurality of passage zones provided with at least one interrogating device which is designed to generate an electromagnetic interrogation field with a predetermined frequency in the associated passage zone;
a plurality of passive electronic responders which are carried by the persons making use of the system and which comprise a resonant circuit tuned to the predetermined frequency, and active means for generating a unique code signal if a responder is disposed in an interrogation field generated by an interrogating device, which code signal can be recognized by the interrogating device,
characterized in that the system comprises at least one movable transmitter/receiver device for detection purposes, which is designed to provide an interrogation signal which is capable of bringing said resonant circuit of a responder into resonance at a relatively large distance, and to detect the signal provided by the resonant circuit, independently of the presence or absence of the code signal of the responder in question.

2. A combined electronic person admission control system and person search system according to claim 1, characterized in that the at least one movable transmitter/receiver device is designed to periodically transmit with intervals, in operation, a search signal with a frequency corresponding with the resonant frequency of the resonant circuit of the responders, while in the intervals the transmitter/receiver device functions as a receiver device which is tuned to the resonant frequency of the resonant circuit of the responders.

3. A combined electronic person admission control system and person search system according to claim 1 or 2, characterized in that the at least one transmitter/receiver device comprises a transmitter device and a receiver device, as well as a control device and an antenna, the control device, in operation, controlling a controllable switch element such that the transmitter device and the receiver device are alternately connected with the antenna.

4. A combined electronic person admission control system and person search system according to any one of the preceding claims, characterized in that the at least one movable transmitter/receiver device is a portable transmitter/receiver device.

5. A combined electronic person admission control system and person search system according to any one of the preceding claims, characterized in that the at least one movable transmitter/receiver device comprises a analog/digital converter and a digital signal processor.

6. A combined electronic person admission control system and person search system according to claim 5, characterized in that the digital signal processor is designed to average successively received signals.

7. A combined electronic person admission control system and person search system according to claim 5 or 6, characterized in that the digital signal processor is designed to add up a plurality of successively received signals, so as to eliminate the contribution of interfering signal components.

8. A combined electronic person admission control system and person search system according to any one of claims 1-5, characterized in that the at least one movable transmitter/receiver device comprises a correlation device for comparing a received signal and a predetermined reference signal.

9. A combined electronic person admission control system and person search system according to any one of the preceding claims, characterized in that for the signaling of a detected responder, use is made of an audible signal which is derived by the transmitter/receiver device from the signal received from a responder.

10. A combined electronic person admission control system and person search system according to any one of claims 5, 6, 7 or 9, characterized in that the digital signal processor applies an algorithm that is at least partly built up according to the principles of Fuzzy Logic.

11. A combined electronic person admission control system and person search system according to any one of claims 5, 6, 7 or 9, characterized in that the digital signal processor is built up according to the principles of a neural network.
